# EUROPÄISCHE PATENTSCHRIFT

(11) **EP 1 673 762 B1**
(45) Veröffentlichungstag und Bekanntmachung des Hinweises auf die Patenterteilung: **28.02.2007**
(21) Anmeldenummer: 04763346.6
(22) Anmeldetag: 20.07.2004
(51) Int. Cl.: G10L 15/22

(54) **NUTZERADAPTIVE DIALOGUNTERSTÜTZUNG FÜR SPRACHDIALOGSYSTEME**
USER-ADAPTIVE DIALOG SUPPORT FOR SPEECH DIALOG SYSTEMS
AIDE AU DIALOGUE ADAPTATIVE EN FONCTION DE L'UTILISATEUR POUR SYSTEME DE DIALOGUE VOCAL

(30) Priorität: 14.10.2003 DE 10348408
(43) Veröffentlichungstag der Anmeldung: 28.06.2006
(73) Patentinhaber: DaimlerChrysler AG, 70567 Stuttgart (DE)
(72) Erfinder: KRONENBERG, Susanne, 89077 Ulm (DE); PHILOPOULOS, Alexandros, 89077 Ulm (DE)
(86) Internationale Anmeldenummer: PCT/EP2004/008085
(87) Internationale Veröffentlichungsnummer: WO 2005/048241

(56) Entgegenhaltungen:
- EP-A- 0 323 381
- US-A- 5 592 583
- US-A1- 2002 147 593

## Beschreibung

Die Erfindung betrifft ein Verfahren zur nutzeradaptiven Dialogunterstützung bei Sprachdialogsystemen nach dem Oberbegriff des Patentanspruchs 1.

Zur Bedienung komplexer technischer Einrichtungen, insbesondere von Assistenzsystemen bei Kraftfahrzeugen, werden zunehmend Sprachdialogsysteme (Spracherkennungssysteme) eingesetzt, da hierbei angenommen wird, dass eine rein sprachliche Interaktion den Bediener der technischen Einrichtung weniger von seiner primären Bedienungsaufgabe ablenkt, als dies eine haptisch-visuelle Bedienung bedingen würde.

Bei Sprachdialogsystemen besteht jedoch generell das Problem, dass man mit dem System unterschiedlich erfahrene Nutzer sprachlich möglichst optimal bedienen muss; beispielsweise einen Anfänger, der mit dem System nicht vertraut ist, oder aber einen Experten, welcher das System in allen Einzelheiten und Finessen kennt und beherrscht. Entsprechend dieser unterschiedlichen Vertrautheit mit dem System werden andere Anforderungen an die Bedienung des Sprachdialogsystems gestellt. Der Anfänger benötigt mehr Hilfestellung und Führung durch das System, um dieses auf dem Wege des learning-by-doing kennen lernen zu können. Der Experte jedoch möchte eine möglichst schnelle und effektive Interaktion mit dem Sprachdialogsystem. Darüber hinaus werden moderne Sprachdialogsysteme immer komplexer, da die Vielfalt der zu bedienenden Funktionen steigt. Dies impliziert, dass es in Zukunft nicht mehr den Experten oder den Anfänger geben wird. Es wird Benutzer geben, die einen Teil der angebotenen Funktionalitäten häufig bedient und die in diesem Teil Experte sind, und es wird Benutzer geben, die sich wiederum nur in einem anderen Teil des Systems auskennen.

Es existieren Sprachdialogsysteme bei welchen es dem Systemnutzer möglich ist anzugeben, wie gut er mit dem System bereits vertraut ist. Dementsprechend interagiert das Dialogsystem mit dem Systemnutzer über kürzere oder längere System-äußerungen (Sprachaufforderungen). Die Einstellen in Bezug auf den Vertrautheitsgrad sind jedoch durch den Systemnutzer aktiv einzugeben und die jeweiligen Einstellungen beziehen sich sodann auf den gesamten Dialog. Dies deckt somit nicht diejenigen Fälle ab, bei denen ein Systemnutzer sich beispielsweise an sich recht gut mit dem Sprachdialogsystem auskennt, aber bei einem Dialogschritt vergessen hat, welche Äußerung auf eine Sprachaufforderung durch das System erwartet wird, um im Dialog sinnvoll voranzuschreiten. Hier hilft es dem Systemnutzer nicht, dass er die Möglichkeit hat die Systemeinstellung in Bezug auf seinen Vertrautheitsgrad zu ändern und hierdurch mitzuteilen, dass er mehr Unterstützung durch das Sprachdialogsystem benötigt, da in den nachfolgenden Dialogschritten diese Unterstützung wiederum nicht mehr benötigt wird. Problematisch ist hierbei zudem, dass durch die erforderliche Eingabe des Vertrautheitsgrades die Systemfunktionalität stark von der Selbsteinschätzung des Systemnutzers abhängt.

Es ist deshalb wünschenswert, dass das Sprachdialogsystem im Fall, dass der Systemnutzer Schwierigkeiten bei der Eingabe der notwendigen Sprachäußerungen hat, automatisch Unterstützung anbietet. Ein derartiges System wird in der Offenlegungsschrift US 2002/0147593 A1 beschrieben. Hierbei ist das Sprachdialogsystem in der Lage zwei unterschiedlich detaillierte Sprachaufforderung auszugeben, jeweils in Abhängigkeit davon ob das System davon ausgeht ob es sich bei dem Systemnutzer um einen unterstützungsbedürftigen Anfänger oder um einen versierten Experten handelt. Bei der Kommunikation mit einem Anfänger verwendet das Sprachdialogsystem Sprachaufforderungen (Prompt) in der für solche Systeme üblichen Detaillierungsgrad, gibt also ausreichend Hinweise auf die Art und Weise der im Rahmen des Dialoges sinnvoller Weise erwarteten Nutzeräußerung. Handelt es sich bei dem Systemnutzer um einen Experten, so wird nur eine verkürzte, optimierte Sprachaufforderung ("tapered" Prompt) ausgegeben. In der Regel enthalten diese verkürzten Sprachaufforderungen keine oder nur sehr wendige erklärende oder unterstützende Hinweise. Während des Dialogverlaufes schätzt das Sprachdialogsystem kontinuierlich den Systemnutzer bezüglich seines Erfahrungsgrades ein und gestaltet entsprechend seine Sprachaufforderungen. Da das System bei der Initiierung des Sprachdialoges nichts über den Systemnutzer weis, werden zuerst Sprachaufforderungen mit dem üblichen Detaillierungsgrad. In denjenigen Fällen, in welchem im Laufe des Dialoges festgestellt wird, dass der Systemnutzer über eine gewisse Anzahl von aufeinander folgenden Dialogschritten sinnvoll auf die Sprachforderungen reagiert, wird davon ausgegangen, dass es sich hierbei um einen Experten handelt, worauf die dieser Einschätzung nachfolgenden Sprachaufforderungen in Form eines Short-Prompts erfolgen. Da diese Einschätzung jedoch fehlerhaft sein kann, wird die Ausgabe von Short-Prompts nur solange fortgesetzt, solange der Systemnutzer auch fehlerfrei und sinnvoll auf diese reagiert. Reagiert der Systemnutzer auf die Short-Prompts mit Äußerungen, welche das Sprachdialogsystem nicht sinnvoll weiter verarbeiten kann, geht dieses dazu über bei der wiederholten Anfrage und nachfolgend wieder Sprachaufforderungen mit dem üblichen Detaillierungsgrad zu generieren. Eine Rückkehr zur Verwendung der Short-Prompts erfolgt erst wieder nachdem wiederum bei einer gewissen Anzahl von aufeinander folgenden Dialogschritten sinnvoll auf die detaillierten Sprachaufforderungen reagiert wurde. Dieses zurückschalten den für den unerfahrenen Systemnutzer gedachten detaillierten Sprachaufforderungen ist notwendig, da das Sprachdialogsystem einzig auf Grund der Art und Weise der Äußerung auf die Sprachaufforderung auf den Erfahrungsgrad des Systemnutzers schließen kann. Problematisch ist hierbei, dass in den Fällen, in welchen ein Experte beispielsweise auf Grund einer Ablenkung eine Fehleingabe vornimmt, dieser nachfolgend wiederholt und unnötig detaillierte Sprachaufforderungen erhält, durch welche er sich gestört fühlen könnte.

Aufgabe der Erfindung ist es deshalb, eine nutzeradaptive Dialogführung für Sprachdialogsysteme zu finden, welche unerfahrene und erfahrene Systemnutzer unterscheidet, und daran angepasste Sprachaufforderungen so generiert, dass auch in denjenigen Fällen, in welchen ein erfahrender Nutzer innerhalb eines Dialogschrittes fehlerhaft reagiert hat, er in den nachfolgenden Schritten, ohne Nachteil für unerfahrene Nutzer, umgehend wieder wie ein erfahrener Nutzer behandelt wird.

Die Aufgabe wird durch ein Verfahren mit den Merkmalen des Patentanspruchs 1 gelöst. Vorteilhafte Ausgestaltungen und Weiterbildungen der Erfindung sind durch die Unteransprüche beschrieben.

Bei dem Verfahren für eine nutzeradaptive Dialogführung gibt ein Sprachdialogsystem eine Sprachaufforderung aus, wobei hierauf das Sprachdialogsystem auf eine Äußerung durch den Systemnutzer wartet. Hierbei wird, um die Nutzeräußerung zu verstehen, ein Spracherkenner aktiviert wird. Das Sprachdialogsystem ist in der Lage unerfahrene und erfahrene Nutzer zu unterscheiden, wobei es unerfahrenen Nutzern eine detaillierte Sprachaufforderung ausgibt, während bei erfahrenen Nutzern eine verkürzte Sprachaufforderung verwendet. In erfinderischer Weise wird dabei von Seiten des Sprachdialogsystems ein Dialogschritt mit einer verkürzten Sprachaufforderung (Initierungssignal) initialisiert. Bei Ausbleiben einer Äußerung des Systemnutzer auf die verkürzte Sprachaufforderung wird sodann nach einer bestimmten Zeit (Erkenner-Timeout) eine detaillierte Sprachaufforderung ausgegeben. In vorteilhafter Weise werden dem Systemnutzer also bei jedem Dialogschritt beide Arten von Sprachaufforderungen, eine verkürzte als auch eine detaillierte, zur Verfügung gestellt. Dabei beginnt der Dialogschritt immer mit einer verkürzten Sprachaufforderung, so dass es dem erfahrenen Systemnutzer (Experte) also immer möglich ist die Initiative zu ergreifen; das heißt, dass es diesem immer möglich ist über die Art und Weise des Dialoges zu entscheiden. Dem erfahren Nutzer ist es somit immer Möglich in Bezug auf den Ablauf des Dialoges die Initiative zu ergreifen. Ist auch er sich an einem Punkt des Sprachdialoges unsicher, welche Art oder Weise der Sprachäußerung das Sprachdialogsystem an dieser Stelle erwartet, kann er einfach den Zeitablauf des Erkenner-Timeouts abwarten und erhält sodann eine detaillierte Sprachaufforderung. Bei den nachfolgenden Schritten kann sich der erfahrene Nutzer wieder gleich nach der verkürzten Sprachaufforderung äußern und den Dialog hierdurch beschleunigen.

In Bezug auf die Gestaltung der verkürzten Sprachaufforderung ist es beispielsweise denkbar, diese auf die notwendigste Information oder auf einzelne, die eigentliche Detailinformation besonders bezeichnende Stichworte zu beschränken. Anderseits kann in besonderes vorteilhafter Weise eine Effizienzsteigerung in Bezug auf den Ablauf des Sprachdialoges geschaffen werden, wenn die verkürzte Sprachaufforderung einzig durch eine neutrale, keine spezifische Information enthaltendes Audio-Signal erfolgt; beispielsweise vergleichbar mit der Sprachaufforderung bei einem Telefonanrufbeantworter, bei welchem der Anrufer aufgefordert wird nach dem Signalton oder dem Piepston (,Beep') zu sprechen.

Die Effizienz des Verfahrens lässt sich weiter, insbesondere in Bezug auf unerfahrene Systemnutzer, dadurch steigern, dass in einer Speichereinheit protokolliert wird, wie häufig ein Systemnutzer sich erst auf die Ausgabe der detaillierten Sprachaufforderung hin äußert. Äußert sich ein Nutzer wiederholt erst dann, das heißt reagiert er nie oder selten bereits auf die verkürzte Sprachaufforderung, so ist dies ein Hinweis darauf, dass es sich bei diesem um einen unerfahrenen System nutzer handeln könnte. In diesem Falle kann in gewinnbringender Weise die Zeitspanne für den Erkenner-Timeout, welcher den Zeitraum zwischen verkürzter und detaillierter Sprachaufforderung definiert, verkürzt werden. Eine sinnvolle Anzahl von für eine Verkürzung des Erkenner-Timeouts notwendigen Widerholungen könnte auf die Anzahl 3 voreingestellt werden ; d.h. Äußert sich der Systemnutzer dreimal hintereinander erst auf die detaillierte Sprachaufforderung so wird der Erkenner-Timeout verkürzt, beispielsweise halbiert. Hierdurch wäre es auch einem unerfahrenen Systemnutzer möglich den Sprachdialog schneller zu Ziel zu führen. Es ist hierbei denkbar den Erkenner-Timeout dann wieder auf die ursprüngliche Zeitspanne zu setzen, wenn der Systemnutzer in einem der Dialogschritte bereits auf die verkürzte Sprachaufforderung hin reagiert; selbstverständlich ist es auch hier möglich diese Fälle zu protokollieren und den Erkenner-Timeout erst nach mehreren sukzessiven Äußerungen auf eine verkürzte Sprachaufforderung wieder auf den ursprünglichen Wert hin zurückzusetzen.

In besonderer Weise könnte die Änderung des Erkenner-Timeouts (Verkürzung oder Verlängerung) auch derart gestaltet werden, dass diese sukzessive in mehreren Schritten erfolgt. So könnte die Verkürzung oder nachträgliche Verlängerung des Erkenner-Timeouts weniger abrupt erfolgen. Beträgt die Änderung für jedes weitere Mal bei dem gleich wie das vorangegangene Mal reagiert wurde beispielsweise 10% der vorherigen Zeitdauer der Erkenner-Timeouts, so würde sich das System annähernd unmerklich an den Systemnutzer anpassen. Das bedeutet, dass für jedes weitere Mal in dem der Systemnutzer sinnvoll erst auf die detaillierte Sprachaufforderung reagierte der Erkenner-Timeout verkürzt würde, und dass er für jedes weitere Mal in welchem er in Folge bereits sinnvoll auf die verkürzte Sprachaufforderung hin antwortete der Erkenner-Timeout in Schritten wieder bis zum ursprünglichen Wert hin erhöht würde. Es wäre hierbei möglich mit der Modifikation des Erkenner-Timeouts bereits nach der ersten Äußerung des Systemnutzers zu beginnen, was die Effizienz des Systems weiter steigern würde.

Eine weitere Effizienzsteigerung des Sprachdialogsystems lässt sich dadurch erzielen, dass dieses Barge-In fähig gestaltet wird. Barge-In erlaubt es dem Systemnutzer, die Sprachaufforderungen eines Sprachdialogsystems durch eine eigene sprachliche Eingabe abzubrechen. Bei einer solchen sprachlichen Eingabe kann es sich zum einen um die vorzeitige Eingabe der vom System erwarteten Äußerung handeln, oder aber um andere den Sprachdialog beeinflussende Angaben. Durch diese sprachliche Eingabe wird die weitere Ausgabe der Sprachaufforderung unterbrochen. Dies bietet den Vorteil einer effizienteren Interaktion mit dem System, indem der Sprachdialog dadurch beschleunigt wird, dass der Systemnutzer Sprachaufforderungen unterbrechen und stoppen kann. Hierdurch wird die Möglichkeit geschaffen, dass insbesondere ein erfahrener Systemnutzer, welcher bei einem Dialogschritt Hilfestellung benötigt, die detaillierte Sprachausgabe bereits zu dem Zeitpunkt abbrechen kann, zu welchem er die für die nachfolgende Sprachäußerung notwendigen Hinweise erhalten hat.

In besonders vorteilhafter Weise wird durch die Erfindung ein Sprachdialogsystem geschaffen, welches dynamisch und schnell auf das aktuelle Bedienverhalten eines Systemnutzers reagieren kann. Ist Systemnutzer mit dem Dialogsystem vertraut, so erlaubt das Verfahren eine effiziente Interaktion, da sofort nach der verkürzten Sprachaufforderung (Initiierungssignal) eine Sprachäußerung getätigt werden kann. Treten dagegen Schwierigkeiten in Bezug auf die zu tätigende Sprachäußerung auf, so reagiert das Sprachdialogsystem entsprechend, indem es eine unterstützende Sprachaufforderung ausgibt. Dabei ist durch der Sprachdialog durch das erfinderische Verfahren gleichzeitig so flexibel ausgelegt, dass falls es zu Schwierigkeiten bei einem der Dialogschritte kommt, dies keine Auswirkungen auf die Reaktionsfähigkeit bei den nachfolgenden Schritten hat. Hat ein Systemnutzer beispielsweise nur deshalb Schwierigkeiten mit der abzugebenden Sprachäußerung, da er gerade abgelenkt war, so wird ihm eine unterstützende Sprachaufforderung präsentiert, auf die er antworten kann. Bei dem nächsten Dialogschritt hat er jedoch wieder die Möglichkeit, sich sofort nach der verkürzten Sprachaufforderung (Initiierungssignal) zu äußern und somit den kürzeren und effizienteren Weg durch den Sprachdialog zu wählen.

## Patentansprüche

1. Verfahren für eine nutzeradaptive Dialogführung für ein Sprachdialogsystem,
bei welchem durch das Sprachdialogsystem eine Sprachaufforderung ausgegeben wird,
wobei hierauf das Sprachdialogsystem auf eine Äußerung durch den Systemnutzer wartet, wobei hierzu, um die Nutzeräußerung zu verstehen, ein Spracherkenner aktiviert wird,
wobei das System unerfahrene und erfahrene Nutzer unterscheidet und es unerfahrenen Nutzern eine detaillierte Sprachaufforderung ausgibt, während bei erfahrenen Nutzern eine verkürzte Sprachaufforderung verwendet,
**dadurch gekennzeichnet,**
**dass** von Seiten des Sprachdialogsystems ein Dialogschritt mit einer verkürzten Sprachaufforderung initialisiert wird,
worauf bei Ausbleiben einer Äußerung des Systemnutzer auf die verkürzte Sprachaufforderung nach einer bestimmten Zeit, Erkenner-Timeout, eine detaillierte Sprachaufforderung ausgegeben wird.

2. Verfahren nach Anspruch 1,
**dadurch gekennzeichnet,**
**dass** die verkürzte Sprachaufforderung in Form eines kurzen akustischen Signals, beispielsweise durch einen Piepston, erfolgt.

3. Verfahren nach einem der Ansprüche 1 oder 2,
**dadurch gekennzeichnet,**
**dass** dann, wenn sich der Systemnutzer wiederholt nicht auf die verkürzte Sprachaufforderung äußert, die Zeitspanne für den Erkenner-Timeout, nach welchem eine detaillierte Sprachausgabe erfolgt, verkürzt wird.

4. Verfahren nach Anspruch 3,
**dadurch gekennzeichnet,**
**dass** die Verkürzung der Zeitspanne für den Erkenner-Timeout mit zunehmender Anzahl von nicht erfolgten Äußerungen auf die verkürzte Sprachaufforderung in mehreren Stufen erfolgt.

5. Verfahren nach Anspruch 3 oder 4,
**dadurch gekennzeichnet,**
**dass** dann, wenn sich der Systemnutzer bereits auf die verkürzte Sprachaufforderung hin meldet, die Zeitspanne für den Erkenner-Timeout, verlängert wird.

6. Verfahren nach einem der vorhergehenden Ansprüche,
**dadurch gekennzeichnet,**
**dass** das Sprachdialogsystem so ausgestaltet wird, dass es dem Systemnutzer möglich ist durch vorzeitige Eingabe von Sprachäußerung, Barge-In, die Ausgabe der Sprachaufforderung zu unterbrechen.

## Claims

1. Method for user-adaptive dialog guidance for a speech dialog system,
in which a speech prompt is output by the speech dialog system,
wherein in response to this the speech dialog system waits for an utterance by the system user, for which purpose a speech recognition system is activated in order to understand the utterance by the user,
wherein the system differentiates inexperienced and experienced users and outputs a detailed prompt to inexperienced users, while it uses a shortened prompt for experienced users,
**characterized in that** a dialog step with a shortened prompt is initialized on the part of the speech dialog system,
after which a detailed prompt is output if there is no utterance by the system user in response to the shortened prompt after a specific time.

2. Method according to Claim 1,
**characterized in that** the shortened prompt occurs in the form of a short audible signal, for example a beeping tone.

3. Method according to one of Claims 1 or 2,
**characterized in that** if the system user repeatedly fails to make an utterance in response to the shortened prompt, the time period for the speech recognition timeout after which a detailed speech output occurs is shorted.

4. Method according to Claim 3,
**characterized in that** the time period for the speech recognition system timeout is shortened as the number of instances in which there is no utterance in response to the shortened prompt increases and occurs in a plurality of stages.

5. Method according to Claim 3 or 4,
**characterized in that** if the system user already responds to the shortened prompt, the time period for the speech recognition system timeout is prolonged.

6. Method according to one of the preceding claims,
**characterized in that** the speech dialog system is configured in such a way that the system user can interrupt the outputting of the prompt by prematurely inputting a speech utterance.

## Revendications

1. Procédé pour mener un dialogue s'adaptant à l'utilisateur pour un système de dialogue vocal avec lequel une invitation vocale est émise par le système de dialogue vocal, le système de dialogue vocal attendant ensuite une expression de la part de l'utilisateur du système, un dispositif de reconnaissance vocale étant activé à cet effet pour comprendre l'expression de l'utilisateur, le système faisant la différence entre un utilisateur inexpérimenté et expérimenté et délivrant aux utilisateurs inexpérimentés une invitation vocale détaillée, alors qu'il emploie une invitation vocale plus courte dans le cas des utilisateurs expérimentés, **caractérisé en ce qu'**une étape de dialogue avec une invitation vocale raccourcie est initialisée du côté du système de dialogue vocal, une invitation vocale détaillée étant émise après un temps donné en l'absence d'une expression de l'utilisateur du système à l'invitation vocale plus courte.

2. Procédé selon la revendication 1, **caractérisé en ce que** l'invitation vocale plus courte est réalisée sous la forme d'un signal sonore court, par exemple un bip sonore.

3. Procédé selon l'une des revendications 1 ou 2, **caractérisé en ce qu'**en l'absence répétitive d'expression de la part de l'utilisateur du système à l'invitation vocale plus courte, l'intervalle de temps pour la fin temporisée du dispositif de reconnaissance après lequel a lieu une invitation vocale détaillée est raccourci.

4. Procédé selon la revendication 3, **caractérisé en ce que** le raccourcissement de l'intervalle de temps pour la fin temporisée du dispositif de reconnaissance s'effectue en plusieurs étapes à mesure que le nombre d'expressions non effectuées à l'invitation vocale plus courte augmente.

5. Procédé selon la revendication 3 ou 4, **caractérisé en ce que** lorsque l'utilisateur du système se signale déjà suite à l'invitation vocale plus courte, l'intervalle de temps pour la fin temporisée du dispositif de reconnaissance est rallongé.

6. Procédé selon l'une des revendications précédentes, **caractérisé en ce que** le système de dialogue vocal est configuré de telle sorte qu'il est possible pour l'utilisateur du système d'interrompre l'émission de l'invitation vocale par une entrée prématurée de l'expression vocale.
